# EUROPEAN PATENT SPECIFICATION

(11) **EP 3 794 692 B1**
(45) Date of publication and mention of the grant of the patent: **18.02.2026**
(21) Application number: 19826333.7
(22) Date of filing: 28.06.2019
(51) Int. Cl.: H01S 3/067, H01S 3/16, H01S 3/094, H01S 3/17

(54) **HIGH-POWER YTTERBIUM:ERBIUM (YB:ER) FIBER LASER SYSTEM WITH 1.02 -1.06 UM CLAD PUMPING SCHEME**
LEISTUNGSSTARKES YTTERBIUM: ERBIUM (YB: ER)-FASERLASERSYSTEM MIT 1,02 -1,06 UM CLADDING-PUMPSCHEMA
SYSTÈME LASER À FIBRE YTTERBIUM : ERBIUM (YB : ER) DE FORTE PUISSANCE À SYSTÈME DE POMPAGE PAR LA GAINE À 1,02-1,06 UM

(30) Priority: 29.06.2018 US 201862691935 P
(43) Date of publication of application: 24.03.2021
(60) Divisional application: 26151675.1
(73) Proprietor: IPG Photonics Corporation, Marlborough, MA 01752 (US)
(72) Inventor: ZAYTSEV, Ilya, Oxford, MA 1540 (US); SHCHERBINA, Fedor, Oxford, MA 01540 (US); MASHKIN, Andrey, Oxford, MA 01540 (US)
(74) Representative: Kobiako von Gamm, Iouri
(86) International application number: PCT/US2019/039751
(87) International publication number: WO 2020/006371

(56) References cited:
- EP-B1- 1 037 334
- US-A- 5 933 271
- US-A- 5 933 271
- US-A1- 2001 026 396
- US-A1- 2009 185 261
- US-A1- 2011 279 891
- MINELLY J D ET AL: "Diode-array pumping of Er/sup 3+//Yb/sup 3+/ Co-doped fiber lasers and amplifiers", IEEE PHOTONICS TECHNOLOGY LETTERS, IEEE, USA, vol. 5, no. 3, 1 March 1993 (1993-03-01), pages 301 - 303, XP011410762, ISSN: 1041-1135, DOI: 10.1109/68.205618
- ALEGRIA C ET AL: "83-W Single-Frequency Narrow-Linewidth MOPA Using Large-Core Erbium-Ytterbium Co-Doped Fiber", IEEE PHOTONICS TECHNOLOGY LETTERS, IEEE, USA, vol. 16, no. 8, 1 August 2004 (2004-08-01), pages 1825 - 1827, XP011115546, ISSN: 1041-1135, DOI: 10.1109/LPT.2004.830520

## Description

### BACKGROUND OF THE DISCLOSURE

### Field of the Disclosure

The disclosure relates to a high-power Yb:Er fiber laser system with the suppressed onset of Yb lasing in a 1 micron wavelength range. In particular, the disclosure relates to a high power fiber oscillator and amplifier based on an Yb:Er doped fiber which is clad pumped in a 1020 - 1060 nm wavelength range.

### Background Art Discussion

There is a demand for high power, practical and low-cost erbium (Er)-doped double clad fiber laser systems operating in a 1.5 - 1.6 µm wavelength range. The laser operation in this wavelength range is attractive for several reasons: it is excellent for pumping thulium (Tm) laser systems, mid-IR parametric amplifiers and oscillators; furthermore, it has a low fiber loss making high-power Er lasers highly advantageous in many scientific and engineering applications.

The most common laser transition in the Er is centered at around 1550 nm. The overwhelmingly popular pumping arrangement for Er-based laser systems operates at around 980 nm pump wavelength and is widely exploited in Er fiber systems. However, the Er fiber devices pumped at a 9xx nm wavelength range may not have sufficient power meeting the ever-growing industrial demands. The main reason limiting the power scaling of Er fiber devices is the lack of high-power single mode (SM) power sources. Typically, the known SM power sources are based on diode lasers, the power of which does not exceed 2 - 3 W. Another limitation stems from the fact that Er ion doping concentration is relatively low for the following reasons. Firstly, at high Er concentrations, the luminescence may be quenched by energy transfer processes due to the interaction between Er ions and OH⁻. Secondly, it is a well-known "concentration quenching" process which de-excites Er ions through electrostatic dipole-dipole interaction. This phenomenon is responsible for the reduced efficiency and gain. Besides, another cooperative upconversion process occurs if a high pump power is applied, which leads to highly undesirable photodarkening causing fiber degradation.

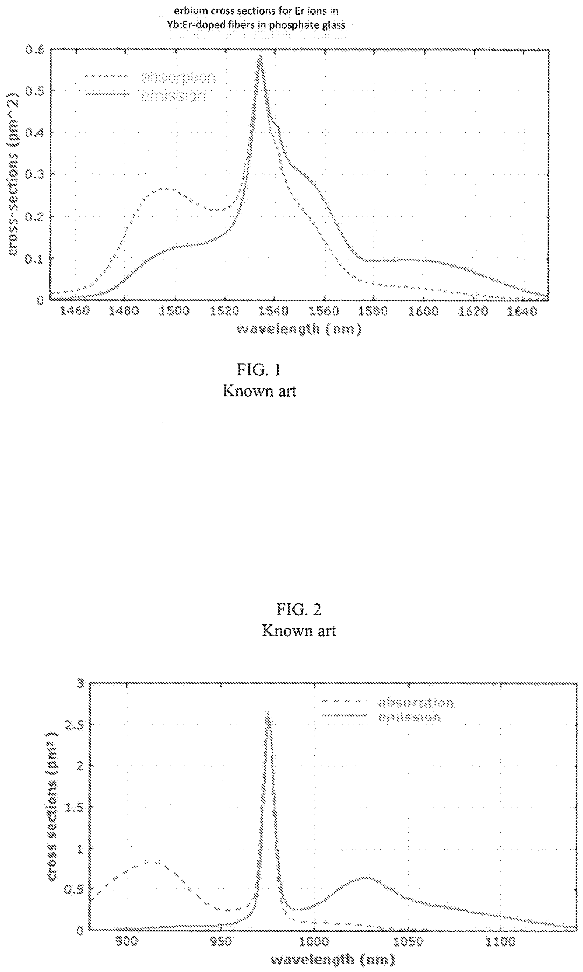

Co-doping Er⁺³ with Yb⁺³, which acts as a sensitizer, has been used to circumvent the relatively low pump absorption in Er fibers increasing Er laser and Er amplifier power scaling. The Yb ion has a simple electronic structure with only one metastable state above the ground state, a broad absorption spectrum, and high absorption and emission cross-sections, as shown in FIG. 2 for silica fibers. Unlike Er, Yb is used in high doping concentrations allowing for the utilization of a clad pumping scheme by high power MM diode lasers. The pumping can in principle be done in a broad wavelength range from 910 nm to 1064 nm. The large absorption cross-section, particularly at the 976 nm, enables high pump absorption leading to relatively short fiber lengths.

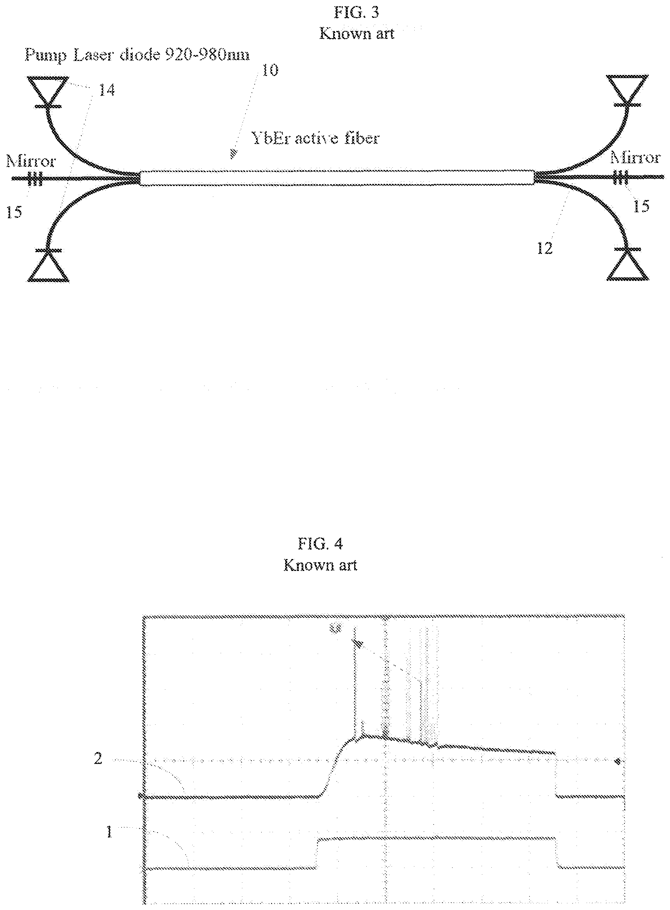

FIG. 3 illustrates a typical schematic of a high-power fiber system configured with an Er laser 10 with an Yb:Er co-doped double clad (DC) fiber 12 which is placed within an optical resonator defined between high and low reflection mirrors 15. The Yb:Er laser is bi-directionally side pumped at a 9xx nm wavelength by a diode laser-based pump 14. In operation, pump light is launched and confined into the inner cladding and spatially overlaps the core of fiber 12. Yb⁺³ ions absorb pump photons over the entire length of fiber 12 while resonantly transferring its energy to Er⁺³ ions. The fiber 12 is the phosphor-silicate glass considered to be an excellent host for an Yb³⁺Er³⁺ co-doped system by virtue of its high emission cross-section. The larger phonon energy in the phosphate host increases the transition probability for the desired relaxation which prevents the energy transfer back from Er⁺³ to Yb⁺³. Also, the large spectral overlap between the Yb emission spectrum and Er absorption spectrum, the energy transfer efficiency from Yb³⁺ to Er³⁺ in phosphor-silicate fibers can reach 95%.

There are a number of limiting factors that hinder the power scaling of laser 12 with the pump arrangement 14 of FIG. 3 operating in a 9xx nm wavelength range. One of these limitations is the parasitic Yb emission in a 1 µm wavelength range which may irreparably damage fiber 12 of Yb:Er fiber laser due to the unwanted high gain coefficient in this wavelength range. FIG. 4 illustrates the parasitic generation in Yb:Er fiber laser 10 of FIG. 2 in a 1 µm wavelength range. The bottom graph 1 illustrates the Er output pulse at 1570 nm. The top graph 2 illustrates the superluminescence signal of Yb with lasing peaks in the 1 µm wavelength range.

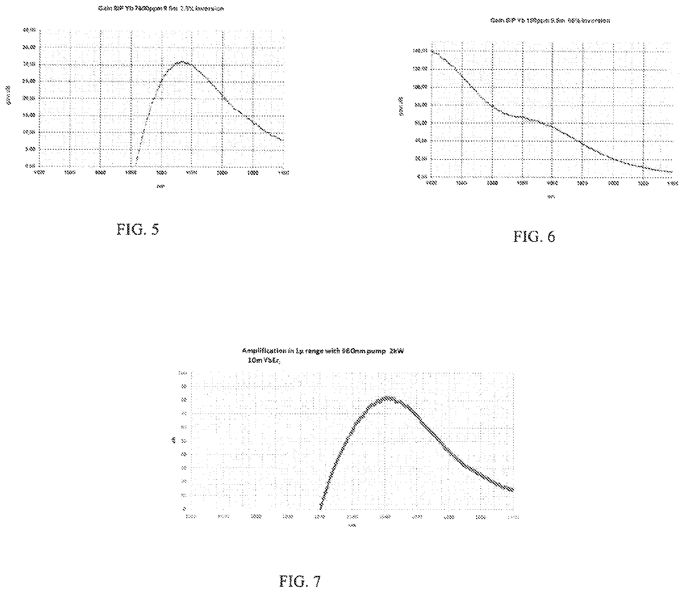

One of the factors explaining the unwanted emission in the 1 µm wavelength range is the presence of a limited quantity of Yb ions isolated from Er ions in the fiber's core that do not participate in energy transfer to Er ions Typically, isolated Yb ions constitute no more than a few percent of the total amount of Yb ions. However, the isolated Yb ions contribute to the total unwanted population inversion incomparably greater than the Yb ions, which participate in energy transfer at the 9xx pump wavelength, as can be seen by comparing the gain spectra in respective FIGs. 5 and 6. The high gain of Yb ions in the 1 µm wavelength range is a typical unwanted phenomenon in Yb:Er fiber laser systems.

Still another factor affecting the power scaling is the parasitic generation in the 1 µm wavelength range. As the temperature of active fibers increases, the coefficient of absorption in this wavelength range and the velocity of transition between Er and Yb ions also increase. But if the latter conditions are not met, higher parasitic generation in the 1 µm wavelength range intensifies.

Based on the foregoing, there is a need for a high power efficient Yb:Er laser and amplifier characterized by low gain in the 1 µm wavelength range. J.D. Minelli et al. "Diode-Array Pumping of Er3+/Yb3+ Co-Doped Fiber Lasers and Amplifiers", IEEE Photonics Technology Letters, Vol. 5, No. 3 (1993), pp. 301-303, describes a double-clad fiber co-doped with Er and Yb which is pumped by a pump source with a wavelength of 1.06 µm. United States Patent No. US 5,933,271 discloses an Er:Yb doped double clad fiber amplifier which is pumped at a wavelength of 1.06 µm. In order to obtain very high power levels from a single double clad fiber amplifier an array of pumping sources comprising rare-earth doped fiber lasers, e.g. Nd or Yb doped double clad fiber lasers, may be utilized. An embodiment relates to a cascaded or multistage fiber amplifier comprising a first amplifier source having a injection signal source to be amplified, which may be a laser diode, and a first pumped fiber amplifier optically coupled to a second pumped fiber amplifier.

### SUMMARY OF THE DISCLOSURE

This need is met by the inventive high-power fiber laser system with an Yb:Er fiber laser and amplifier by implementing at least one Yb fiber laser pumping an Yb:Er doped fiber in a 1 - 1.06 µm pump wavelength range. According to an aspect, the present invention provides a fiber laser system according to claim 1. Further aspects of the invention are set forth in the dependent claims, the drawings and the following description of embodiments.

Pumping an Yb:Er doped fiber at the 1 - 1.06 µm pump wavelength range limits the population inversion of isolated Yb Ions to about 2 - 15% by comparison with the 70% population inversion at the 9xx nm pump wavelength. At the same time, the longer pump wavelength does not significantly affect the population inversion of Yb⁺³ ions partaking in energy transfer to Er⁺³ ions. With a small inversion population of isolated Yb⁺³ ions, the maximum gain coefficient in the 1 µm range at a 1020-1060 nm pump wavelength is considerably lower than that at a 9xx nm pump wavelength. As a consequence, the inventive system has a significantly higher lasing threshold in the 1 µm wavelength range than the threshold of the known schematics operating at a 9xx nm pump wavelength.

More specifically, the inventive system is configured with an Yb:Er fiber laser. In particular, the fiber laser is based on Er:Yb co-doped double clad (DC) configuration pumped by a laser source which operates in a 1.02 -1.06 µm pump wavelength range. The pump light can be coupled into the pump cladding of the DC fiber in either one of forward and backward directions (relative to signal light propagation direction) or bidirectionally.

The disclosed Yb:Er DC fiber, outputting signal light around a 15xx nm wavelength, may be configured with a single mode (SM) core, low mode (LM) core which outputs signal light in a 15xx nm range having the M² under 5, and preferably lower than 2, or multimode (MM) fiber.

According to still another aspect, the disclosed pump laser may be either SM or MM. Furthermore, the technique of pumping the Yb:Er fiber may be either side or end pumping. The concrete pumping technique is subject to the task at hand and can be used with any or all features of the above mentioned aspects and features of the disclosed system.

the Yb:Er system is configured with an Yb laser pump which operates in 1020 - 1060 nm wavelength range, a seed outputting signal light at the desired 15xx - 16xx nm wavelength and one or more amplifying cascades. Both the seed and amplifier(s) are based on the Yb:Er fiber. In combination, the seed and amplifier constitute a master oscillator power fiber-amplifier (MOPFA) architecture.

The Yb pump fiber laser as disclosed in all of the above aspects may pump both the seed source and amplifier in accordance with all of the above-disclosed pumping techniques.

The disclosed above MOPFA configuration can be used as a Yb:Er pump for variously doped active mediums. One of the industrial applications of the Yb:Er pump includes pumping an Er fiber laser or amplifier which operates at a longer wavelength than that of the Yb:Er pump light. Still another application of the Yb:Er pump includes outputting pump light coupled into a thulium-doped (Tm) gain media.

The above-disclosed MOPFA configuration can operate in different operating regimes. Namely, they can operate a continuous wave (CW), quasi CW (QCW) or pure pulsed regimes.

### BRIEF DESCRIPTION OF THE DRAWINGS

The above and other features and advantages will become more apparent from the specific description accompanied by the following drawings, in which:
FIG. 1 is the known absorption and emission cross-sections of Er⁺³ ions in Yb:Er phosphate glasses.
FIG. 2 is the known absorption and emission cross-sections of Yb⁺³ ions in silica glasses.
FIG. 3 is an optical schematic of the known Yb:Er laser pumped at a 9xx nm pump wavelength.
FIG. 4 illustrates an example of signal and parasitic generation at respective 1.5 µm and 1 µm wavelengths in Yb:Er QCW fiber laser.
FIG. 5 illustrates gain of Yb⁺³ ions participating in energy transfer to Er⁺³ in the Yb:Er fiber at a 9xx nm pump wavelength of FIG. 2.
FIG. 6 illustrates gain isolated Yb⁺³ ions in the Yb:Er fiber of the schematic of FIG. 2.
FIG. 7 illustrates is a total gain of all Yb⁺³ ions at parasitic in at 1 µm parasitic wavelength in the schematic of FIG. 2.
FIG. 8 is an optical schematic of the disclosed laser system.
FIG. 9 is a total gain of all Yb⁺³ ions at 1 µm parasitic wavelength in the schematic of FIG. 8.
FIG. 10 an optical schematic illustrating the fiber laser system of FIG. 8 operating in a master oscillator power fiber amplifier configuration in accordance with the present invention.
FIG. 11 is an optical schematic of the inventive fiber laser system of FIG. 9 pumping gain medium which is doped with ions of Tm.

### SPECIFIC DESCRIPTION

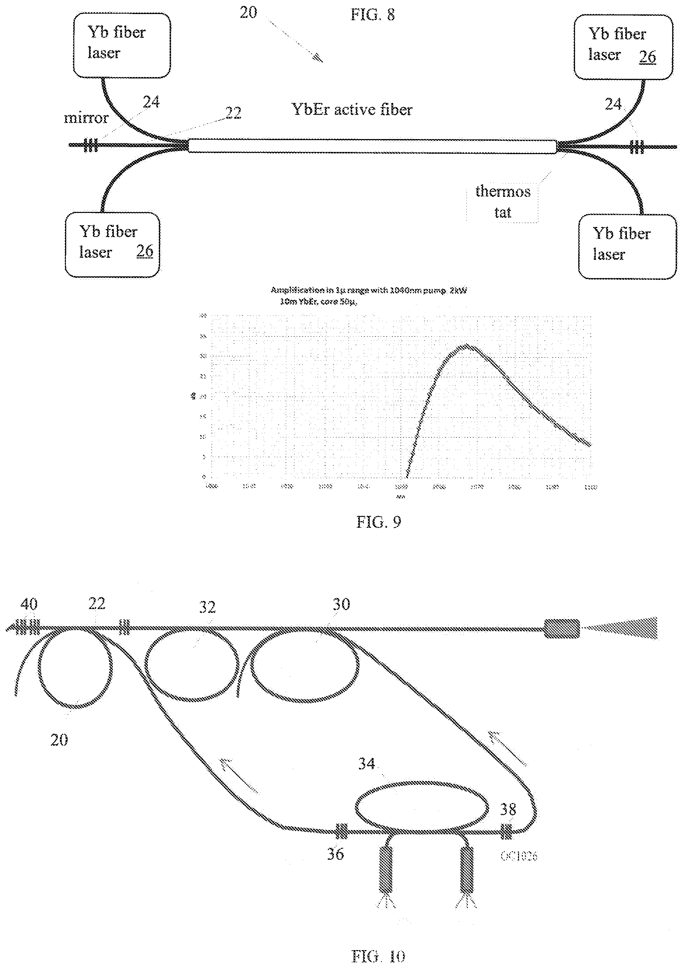

FIG. 8 illustrates the schematic of a MM Er fiber laser 20 based on a double clad Yb:Er doped fiber 22 which is placed in a resonant cavity defined between MM wavelength reflectors 24. In contrast to the known art, the Er fiber laser is clad pumped by a pump source, such as a Fabry-Perrot Yb fiber laser operating at a 1020 - 1060 nm pump wavelength to output signal light around a 15xx nm wavelength. The pumping arrangement may be configured in accordance with a side-pumping or end pumping technique allowing unidirectional pumping in either one of opposite light propagating directions or, as shown, bidirectional pumping.

In an example that is not part of present invention, the exemplary fiber 22 of FIG. 8 is pumped by one or more MM Yb pump fiber lasers 26 side-pumping the fiber 22 at a 1028 nm pump wavelength. The fiber 22 has a 50 µm MM core doped with Yb:Er ions and a length of about 10 meters. The 1 kW output at a 1570 nm signal wavelength in a QCW regime has been obtained without reaching parasitic generation of Yb⁺³ ions in a 1 µm wavelength range. In contrast, the same exemplary schematic in the configuration of FIG. 3, operating with a 960 - 970 nm pump, outputs maximum 300 - 400 W at the 1570 nm signal wavelength after which the parasitic generation in a 1 µm wavelength range is theoretically determined. Theoretically, if the 1 kW output at the 960 nm pump wavelength was attainable by using the configuration of FIG. 3, the total amplification in the 1 µm of all Yb⁺³ ions would exceed 80 dB, as shown in FIG. 7. In contrast, theoretically, the inventive structure of FIG. 8 would have only a 32 dB total parasitic amplification for the same 1 kW output, as clearly seen in FIG. 9 for fiber 22 as disclosed above.

FIG. 10 illustrates an optical schematic 30 in accordance with the present invention, utilizing the QCW Yb:Er fiber laser at a 1020 - 1060 nm pump wavelength range in a master oscillator power fiber amplifier (MOPFA) configuration. Placed between Yb:Er fiber laser 20 and Yb:Er fiber amplifier or booster 30 is a filter 32 configured as a length of Yb-doped fiber further dealing with a parasitic signal in the 1 µm wavelength range at the output of fiber 22. The pump arrangement including an Yb fiber laser 34 configured to pump both laser 20 and booster 30. The pumping of Yb:Er fibers is realized by providing a resonant cavity of Yb pump 34 between two relatively weak wavelength reflectors 36 and 38 which allows pump light to be coupled into laser 20 and booster 30 with the pump light coupled into laser 20 being substantially weaker than that coupled into fiber booster 30. To prevent the unwanted leakage of signal light at the 15xx nm wavelength from the cavity of laser 20, a combination of multiple MM strong wavelength reflectors 40 are installed along the upstream of Yb:Er fiber 22.

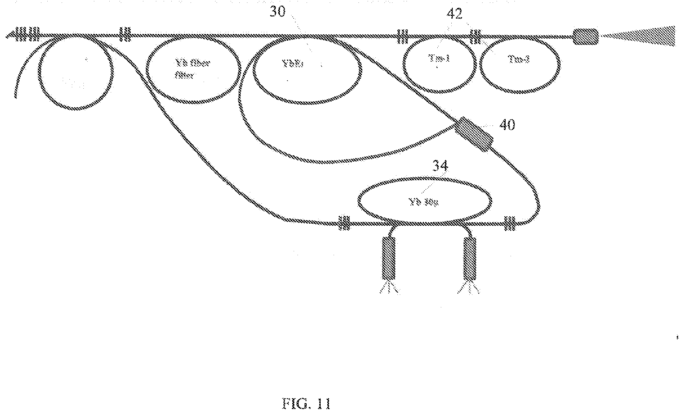

Turning to FIG. 11, the inventive Yb:Er fiber configuration may be utilized as a pump unit for the Tm fiber laser system 42. The latter may be implemented as an individual Tm fiber laser or, as shown, in MOPFA configuration, or separate Tm fiber amplifier.

In summary, the 1020 - 1060 nm pump wavelength range allows reducing the gain of isolated Yb⁺³ ions and raising the threshold of parasitic generation in the 1 µm wavelength in 2-3 times in Yb:Er phosphate fibers.

The currently disclosed approach can help optimize the configuration of Yb:Er fiber for any given task. Typically, the maximum power of the laser system and quality of light are set from the beginning. With these parameters known a priori, a maximum acceptable parasitic gain in the 1 µm wavelength range is determined. Depending on the concrete application of the Yb:Er lasers system, the acceptable parasitic gain may vary. For example, if the Yb:Er fiber laser is utilized as a pump for Tm-doped fibers, then the maximum acceptable gain in the 1 µm wavelength range can be higher than that of the Yb:Er fiber used for thermally treating materials which have reflective surfaces. As to the quality of light signal at the output of the Yb:Er fiber laser, it mostly depends on parameters of gain media, i.e., Yb:Er fibers, such as core dimeter, fiber length, core NA and others well known to one of ordinary skill in the laser arts.

Assume that for the desired output power of Yb:Er laser at a 15xx µm wavelength, a high-power pump, operating at a 1 µm wavelength, is required. Typically, the pump efficiency is assumed to be 50% due to various light losses, i.e., for example, a 1 kW system output at the 1550 nm requires roughly 2 kW of pump light at a 1 µm wavelength range.

In accordance with foregoing, there are two groups of Yb ions in Yb:Er media. The first group includes isolated Yb⁺³ ions which constitute no more than 5% of the total number of Yb⁺³ ions and have a lifetime between 1 ms and 1.4 ms. The other group includes, for example, 95% of Yb⁺³ ions partaking in energy transfer to Er⁺³ ions with a lifetime of tens of microseconds (µs). The absorption of pump light by the ions of Yb⁺³ is distributed as 5% to 95% with the latter being absorbed by the ions of the second energy transferring Yb⁺³ ions.

With the assumptions disclosed above, the level of inversion population in each of the Yb⁺³ ion groups is determined at the 2 kW pump output at a, for example, 1020 nm wavelength for the given fiber length. Then, knowing the inversion population in both groups of Yb⁺³ ions, the respective gains of Yb⁺³ ions in both groups are determined and summed up. If the maximum parasitic gain exceeds the maximum acceptable level, then the following steps can be undertaken.

First, the doped fiber length can be altered and the resulting gain of Yb⁺³ ions can be recalculated following the procedure disclosed above. However, the fiber length cannot be limitlessly increased since it can result in intolerant light losses and reduced laser efficiency.

Second, the pump wavelength is increased. For example, instead of 1020 nm wavelength a 1030 nm wavelength is used. With the longer pump wavelengths, the population inversion of isolated Yb ions and therefore the gain in the unwanted wavelength range decrease. As a consequence, with the same 2 kW pump power, the population inversion of isolated Yb ions is reduced, whereas the population inversion of energy transferring Yb⁺³ ions remains unchanged. As a result, the unwanted total Yb gain in the 1 µm wavelength range is also reduced.

With the longer pump wavelength, the configuration of the Yb:Er fiber should also be reconsidered. For example, it may be necessary to reduce the cladding diameter from, for example, 200 µm to 150 µm.

Active Er:Yb fibers have a temperature close to the room temperature at the initial stage of laser operation. As the laser continues to work, the temperature of the gain medium rises. The parasitic generation in a 1 µm wavelength range is present at relatively low temperatures during a so-called cold start. Yet, as the laser continues to operate and temperature goes up, this generation practically disappears. Accordingly, to even further minimize the parasitic generation in the 1 µm wavelength range, the inventive fiber laser system shown in FIG. 8 includes a thermostat controllable to maintain the temperature of Yb:Er fibers from the very beginning in a certain temperature range. The lowest limit of the range obviously should be higher than room temperature and the highest temperature obviously should not reach a level detrimental to the fiber's integrity. The range can be determined analytically or experimentally for each individual laser.

One of ordinary skill in the laser arts readily realizes that many different configurations of the disclosed individual fiber lasers can be easily implemented without departing from the scope of the invention. Obviously, the operational regime of the inventive structure is not limited to a QCW configuration and can be successfully used in both CW and pulsed regimes. SM or low mode lasers, pumps and amplifiers can replace the above-disclosed MM devices. The disclosed signal light powers are only exemplary and certainly can and will be increased with optimization of pump powers and cooling arrangement.

Accordingly, it is to be understood that while the invention has been described in conjunction with the detailed description thereof, the foregoing description is intended to illustrate and not limit the scope of the invention, which is defined by the scope of the appended claims.

## Claims

1. A fiber laser system comprising:
a master oscillator power fiber amplifier, MOPFA, configuration including an Yb:Er fiber laser (20) which seeds an Yb:Er fiber amplifier (30), both the Yb:Er fiber laser (20) and the Yb:Er amplifier (30) being based on a double clad Yb:Er doped active fiber (22) which is configured with a core doped with ions of Er⁺³ and Yb⁺³, and a cladding surrounding the core;
a plurality of strong wavelength reflectors (40) arranged upstream of the Yb:Er doped active fiber (22) of the Yb:Er fiber laser (20);
a filter (32) configured as a length of Yb-doped fiber and arranged between the Yb:Er fiber laser (20) and the Yb:Er fiber amplifier (30); and
an Yb fiber laser (34) configured as a pump laser outputting pump light in a 1.02 - 1.06 µm wavelength range coupled into the Yb:Er doped active fiber (22) of both the Yb:Er fiber laser (20) and the Yb:Er fiber amplifier (30), wherein
a resonant cavity of the Yb fiber laser (34) is provided between two weak wavelength reflectors (36, 38) configured to allow pump light to be coupled into the Yb:Er fiber laser (20) and the Yb:Er amplifier (30), wherein the pump light coupled into the Yb:Er fiber laser (20) is weaker than the pump light coupled into the Yb:Er amplifier (30).

2. The fiber laser system of claim 1, wherein the pump laser (34) is an SM or a MM fiber laser and configured with a Fabry-Perrot resonator.

3. The fiber laser system of claims 1, wherein the Yb:Er fiber amplifier (30) is unidirectionally pumped or bi-directionally pumped.

4. The fiber laser system of claim 1, wherein the active fiber (22) is end pumped or side-pumped.

5. The fiber laser system of claim 1, further comprising a thermostat controllable to maintain a temperature of the Yb:Er doped active fiber (22) above room temperature.

## Patentansprüche

1. Faserlasersystem, umfassend
eine Auslegung mit einem MOPFA (master oscillator power fiber amplifier), der einen Yb:Er-Faserlaser (20) umfasst, der einen Yb:Er-Faserverstärker (30) beimpft, wobei sowohl der Yb:Er-Faserlaser (20) als auch der Yb:Er-Verstärker (30) auf einer doppelt umhüllten mit Yb:Er dotierten aktiven Faser (22) basieren, die mit einem Kern, der mit Ionen von Er⁺³ und Yb⁺³ dotiert ist, und einer den Kern umgebenden Umhüllung ausgelegt ist, eine Vielzahl von starken Wellenlängenreflektoren (40), die stromaufwärts von der mit Yb:Er dotierten aktiven Faser (22) des Yb:Er-Faserlasers (20) angeordnet ist, einen Filter (32), der als eine Länge der mit Yb dotierten Faser ausgelegt und zwischen dem Yb:Er-Faserlaser (20) und dem Yb:Er-Faserverstärker (30) angeordnet ist, und
einen Yb-Faserlaser (34), der als ein Pumplaser ausgelegt ist, der Pumplicht in einem Wellenlängenbereich von 1,02 bis 1,06 µm ausgibt, das in die mit Yb:Er dotierte aktive Faser (22) sowohl des Yb:Er-Faserlasers (20) und des Yb:Er-Faserverstärkers (30) gekoppelt ist, wobei ein optischer Resonator des Yb-Faserlasers (34) zwischen zwei schwachen Wellenlängenreflektoren (36, 38) bereitgestellt ist, die dazu ausgelegt sind, zu ermöglichen, dass Pumplicht in den Yb:Er-Faserlaser (20) und den Yb:Er-Verstärker (30) gekoppelt werden kann, wobei das Pumplicht, das in den Yb:Er-Faserlaser (20) gekoppelt wird, schwächer ist als das Pumplicht, das in den Yb:Er-Verstärker (30) gekoppelt wird.

2. Faserlasersystem nach Anspruch 1, wobei es sich bei dem Pumplaser (34) um einen Single-Mode- oder einen MultiMode-Faserlaser handelt, der mit einem Fabry-Perrot-Resonator ausgelegt ist.

3. Faserlasersystem nach Anspruch 1, wobei der Yb:Er-Faserverstärker (30) unidirektional oder bidirektional gepumpt wird.

4. Faserlasersystem nach Anspruch 1, wobei die aktive Faser (22) endgepumpt oder seitengepumpt wird.

5. Faserlasersystem nach Anspruch 1, ferner umfassend einen Thermostaten, der so regelbar ist, dass er eine Temperatur der mit Yb:Er dotierten aktiven Faser (22) aufrechterhält, die über der Raumtemperatur liegt.

## Revendications

1. Système laser à fibre comprenant :
une configuration de système MOPFA (master oscillator power fiber amplifier), comprenant un laser à fibre Yb:Er (20) qui alimente un amplificateur à fibre Yb:Er (30), le laser à fibre Yb:Er (20) et l'amplificateur Yb:Er (30) étant tous deux basés sur une fibre active dopée Yb:Er à double gaine (22), laquelle est configurée avec un cœur dopé avec des ions Er⁺³ et Yb⁺³, et une gaine entourant le cœur ;
une pluralité de réflecteurs à forte longueur d'onde (40), disposés en amont de la fibre active dopée Yb:Er (22) du laser à fibre Yb:Er (20) ;
un filtre (32) configuré comme une longueur de fibre dopée Yb et disposé entre le laser à fibre Yb:Er (20) et l'amplificateur à fibre Yb:Er (30) ; et
un laser à fibre Yb (34) configuré comme un laser de pompage émettant une lumière de pompage dans une gamme de longueurs d'onde de 1,02 à 1,06 µm, couplé à la fibre active dopée Yb:Er (22) du laser à fibre Yb:Er (20) et de l'amplificateur à fibre Yb:Er (30),
une cavité résonante du laser à fibre Yb (34) étant prévue entre deux réflecteurs de faible longueur d'onde (36, 38) configurés pour permettre à la lumière de pompage d'être couplée dans le laser à fibre Yb:Er (20) et l'amplificateur Yb:Er (30), la lumière de pompage couplée dans le laser à fibre Yb:Er (20) étant plus faible que la lumière de pompage couplée dans l'amplificateur Yb:Er (30).

2. Le système laser à fibre selon la revendication 1, dans lequel le laser de pompage (34) est un laser à fibre monomode (SM) ou multimode (MM) et est configuré avec un résonateur Fabry-Perrot.

3. Le système laser à fibre selon la revendication 1, dans lequel l'amplificateur à fibre Yb:Er (30) est pompé de manière unidirectionnelle ou bidirectionnelle.

4. Le système laser à fibre selon la revendication 1, dans lequel la fibre active (22) est pompée par l'extrémité ou par le côté.

5. Le système laser à fibre selon la revendication 1, comprenant en outre un thermostat pouvant être commandé pour maintenir la température de la fibre active dopée Yb:Er (22) au-dessus de la température ambiante.
